# FASCICULE DE BREVET EUROPEEN

(11) **EP 3 992 087 B1**
(45) Date de publication et mention de la délivrance du brevet: **02.08.2023**
(21) Numéro de dépôt: 21204619.7
(22) Date de dépôt: 26.10.2021
(51) Int. Cl.: B64D 27/26, B64D 27/18

(54) **ARCHITECTURE DE MÂT HAUBANÉ POUR ACCROCHER UN MOTEUR À UN AÉRONEF**
ARCHITEKTUR EINES ABGESPANNTEN MASTES ZUM AUFHÄNGEN EINES TRIEBWERKS AN EINEM LUFTFAHRZEUG
ARCHITECTURE OF ANCHOR MAST FOR LINKING AN ENGINE TO AN AIRCRAFT

(30) Priorité: 27.10.2020 FR 2010987
(43) Date de publication de la demande: 04.05.2022
(73) Titulaire: AIRBUS OPERATIONS (S.A.S.), 31060 Toulouse (FR)
(72) Inventeur: PAUTIS, Olivier, 31060 TOULOUSE (FR); COLMAGRO, Jérôme, 31060 TOULOUSE (FR)
(74) Mandataire: Jardel, Marc Henry Philippe

(56) Documents cités:
- WO-A1-95/18042
- WO-A1-2006/056678
- WO-A2-2011/012821
- FR-A1- 3 078 950
- US-A1- 2005 082 423

## Description

La présente invention concerne un mât d'accrochage de moteur pour aéronef. Un tel mât a pour fonction de relier un moteur d'aéronef à un élément structurel de l'aéronef, tel que par exemple une aile, une partie arrière de fuselage ou un élément de l'empennage.

L'invention s'applique à tout type d'aéronef équipé de n'importe quel type de motorisation, tel que par exemple des turboréacteurs ou des turbopropulseurs. En général, pour ce qui concerne les aéronefs civils pouvant transporter au moins 100 passagers, ceux-ci sont équipés d'au moins un moteur suspendu sous chaque aile par un mât d'accrochage ou fixé de chaque côté d'une partie arrière de fuselage.

L'architecture des mâts d'accrochage de moteur à droite ou à gauche du fuselage peut être identique ou symétrique.

Dans la suite les notions de vertical et d'horizontal, d'avant et d'arrière, de haut et de bas ou d'inférieur et de supérieur sont à considérer par rapport à la position d'un aéronef posé au sol.

La fonction première d'un mât d'accrochage de moteur est de supporter le moteur, par exemple de suspendre un moteur sous une aile d'aéronef, et de permettre au moteur de transférer, entre autre, la poussée qu'il génère au reste de l'aéronef pour le propulser. Le mât d'accrochage de moteur sert aussi à acheminer les conduites hydrauliques ou pneumatiques, et les câbles électriques reliant le moteur aux différents organes de contrôle du moteur, ainsi que d'acheminer les conduites d'alimentation en carburant du moteur.

Les mâts d'accrochage de moteur connus sont constitués d'une structure primaire et d'une structure secondaire. La structure primaire est réalisée sous la forme d'un caisson structurel relié mécaniquement au-dessous de l'aile par un dispositif de fixation mât/aile et à la partie supérieure du moteur par un dispositif de fixation mât/moteur. La structure secondaire est composée de différents éléments de carénage permettant de réduire la traînée générée en vol par l'écoulement de l'air autour du mât d'accrochage de moteur et d'y intégrer les différents aménagements et cheminements des systèmes présents dans le système propulsif. Une partie avant de carénage présente un profil aérodynamique permettant de gérer le plus efficacement possible la bifurcation du flux d'air de part et d'autre de l'avant du mât d'accrochage de moteur. A l'arrière du mât d'accrochage moteur, se trouve la partie arrière de carénage du mât, aussi appelée APF qui est l'acronyme de l'appellation anglaise Aft Pylon Fairing. L'APF assure une convergence progressive des directions d'écoulement des couches d'air de part et d'autre du mât afin qu'à leur jonction les turbulences soient réduites au minimum.

Le caisson structurel formant la structure primaire est composé d'un longeron inférieur, d'un longeron supérieur et de panneaux latéraux. A l'intérieur, des nervures lui apportent la rigidité structurelle pour transmettre à l'aile les contraintes mécaniques subies par le moteur durant les différentes phases de vol de l'aéronef. Des éléments d'attache du moteur sur le mât sont situés au niveau du longeron inférieur et des éléments d'attache du mât sous l'aile sont situés au niveau du longeron supérieur.

Les éléments d'attache du moteur au mât et les éléments d'attache du mât sous l'aile forment des systèmes de fixation isostatique permettant de réagir aux contraintes de flexion et de torsion ainsi qu'à la force de poussée transmises par le moteur à l'aile via le mât d'accrochage de moteur. Ces éléments d'attache du mât d'accrochage de moteur sous l'aile sont composés d'éléments de liaison, de manilles et d'axes de cisaillement reliant par le dessus le mât d'accrochage à des éléments de suspension en dessous de l'aile et à des éléments de support au-dessus du moteur. En général, ces éléments de suspension et de support sont reliés par des éléments de renfort, du type ferrures d'interfaces, aux éléments structurels du moteur et de l'aile.

L'évolution des motorisations proposées pour propulser les aéronefs va vers des moteurs de plus en plus lourds et volumineux, et générant une poussée accrue, tel que par exemple des turboréacteurs à taux de dilution ultra haut aussi appelés UHBR (UHBR correspond à l'acronyme de l'appellation anglaise « Ultra High Bypass Ratio »). L'augmentation du poids et du diamètre des moteurs suspendus sous les ailes entraîne des contraintes supplémentaires sur la géométrie et le poids des mâts d'accrochage de ces moteurs. En effet, les moteurs étant plus volumineux, l'espace disponible entre les ailes et le sol pour y implanter les moteurs et leur mât d'accrochage est plus restreint. De plus, le poids et la poussée supérieure des turboréacteurs UHBR génèrent plus de contraintes au niveau de leur mât d'accrochage ce qui entraîne un alourdissement et une augmentation des dimensions de tous les éléments constitutifs des mâts d'accrochage. Une augmentation des dimensions géométriques du mât accroît la difficulté de son implantation dans l'espace restreint disponible entre l'aile et le moteur et pénalise l'aérodynamisme de ce dernier. De surcroît, l'augmentation des dimensions du mât et notamment de la largeur de sa structure primaire a une influence substantielle sur la traînée engendrée par le mât d'accrochage du moteur.

Il est connu du document FR3078950 une structure primaire d'un mât de support d'un groupe propulseur d'aéronef comportant une partie avant liée au groupe propulseur et une partie arrière liée à une structure de l'aéronef. La partie avant est formée d'un caisson comportant des longerons supérieur et inférieur, ainsi que des panneaux latéraux. La partie arrière est formée d'un ensemble de bielles. La première extrémité de chaque bielle est liée à la partie avant et la deuxième extrémité de chaque bielle est liée à une interface distincte de fixation à la structure de l'aéronef.

Il est connu du document WO2011/012821 un assemblage pour aéronef comprenant des moyens d'attache d'une structure primaire de mât d'accrochage sur une aile, formant un système isostatique et comprenant une attache logée dans un bord d'attaque de l'aile et conçue pour assurer uniquement la reprise des efforts s'exerçant selon les directions transversale et longitudinale et une attache comprenant une bielle s'étendant vers l'arrière, dont une extrémité est raccordée sur la structure primaire et l'autre extrémité raccordée sur l'élément de voilure.

Il est connu du document WO2006/056678 un système de fixation d'un mât de moteur à une aile d'un aéronef comportant des attaches avant et arrière, et une attache intermédiaire reliant le mât à l'aile. L'attache arrière est unique et comporte une ferrure inférieure solidaire du mât, une ferrure supérieure solidaire de l'aile et au moins une bielle reliant les ferrures inférieure et supérieure par l'intermédiaire d'axes d'articulation parallèles.

La présente invention a pour but de proposer un mât d'accrochage de moteur permettant de réduire les dimensions de sa structure primaire et les efforts générés au niveau des interfaces structurelles entre le mât et l'aile.

A cet effet, selon un premier aspect de l'invention, il est proposé un mât d'accrochage de moteur d'aéronef à un élément structurel d'aéronef, ledit mât d'accrochage de moteur comprenant une structure primaire, un premier dispositif d'attache à un moteur d'aéronef et un deuxième dispositif d'attache audit élément structurel d'aéronef, le deuxième dispositif d'attache audit élément structurel d'aéronef comprend au moins un hauban, un premier dispositif de fixation de hauban reliant mécaniquement une première extrémité de l'au moins un hauban à l'élément structurel d'aéronef, et un deuxième dispositif de fixation de hauban reliant mécaniquement une deuxième extrémité de l'au moins un hauban à la structure primaire, le deuxième dispositif d'attache audit élément structurel d'aéronef comprenant en outre une fixation à rotule reliant mécaniquement l'arrière de la structure primaire à l'élément structurel de l'aéronef, le mât d'accrochage comprenant au moins deux haubans latéraux reprenant le moment de flexion (MfZ) générés autour d'un axe Z sensiblement perpendiculaire à l'élément structurel d'aéronef auquel est fixé le mât d'accrochage et passant par la rotule de fixation, et au moins deux haubans transversaux reprenant les moments de torsion (MtX) générés autour d'un axe X sensiblement parallèle à la direction de déplacement de l'aéronef et passant par la rotule de fixation.

Cette architecture de mât haubané permet de réduire les dimensions de la structure primaire et des différents éléments constitutifs des dispositifs de fixation.

Préférentiellement, l'au moins un hauban est une bielle.

Avantageusement, le premier dispositif de fixation comprend un dispositif de type manille dont une première partie est apte à être reliée mécaniquement à l'élément structurel d'aéronef, une deuxième partie est reliée mécaniquement à ladite première extrémité de l'au moins un hauban, et un premier axe relie la première partie et la deuxième partie du dispositif de type manille.

Préférentiellement, la première partie du dispositif de type manille est apte à être reliée mécaniquement à l'élément structurel d'aéronef via une plaque de renfort du mât d'accrochage.

Avantageusement, le deuxième dispositif de fixation comprend un dispositif de type manille comprenant un étrier de fixation et un anneau d'haubanage. L'étrier de fixation et l'anneau d'haubanage sont reliés mécaniquement entre eux par un deuxième axe de manille et, les deux sont reliés mécaniquement respectivement soit à la structure primaire soit à ladite deuxième extrémité de l'au moins un hauban.

Avantageusement, le mât d'accrochage comprend en outre au moins un hauban supérieur et un hauban inférieur reprenant les moments de flexion générés autour d'un axe Y sensiblement perpendiculaire aux axes X et Z et passant par la fixation à rotule. Lesdits haubans inférieur et supérieur s'étendent sensiblement dans un plan contenant les axes X et Z.

Préférentiellement, ledit hauban inférieur prolonge vers l'arrière la structure primaire.

Selon un deuxième aspect de l'invention, il est proposé un aéronef comprenant au moins un moteur suspendu sous une aile de l'aéronef par un mat d'accrochage de moteur tel que décrit ci-dessus.

Avantageusement, la structure primaire du mât d'accrochage de moteur est implantée en porte à faux sur l'avant de l'aile sous laquelle il est relié mécaniquement.

D'autres caractéristiques et avantages de l'invention sont mis en évidence par la description ci-après d'exemples non-limitatifs de réalisation des différents aspects de l'invention. La description se réfère aux figures annexées qui sont aussi données à titre d'exemples de réalisation non limitatifs de l'invention :
- la figure 1 représente une vue en perspective d'un aéronef équipé de mâts d'accrochage de moteur selon l'invention ;
- la figure 2 représente une vue en perspective d'un mât d'accrochage de moteur selon l'invention ;
- la figure 3 représente une vue arrière d'un mât d'accrochage de moteur selon l'invention ;
- la figure 4 représente une vue de côté d'un mât d'accrochage de moteur selon l'invention ;
- la figure 5 représente une vue de dessus d'un mât d'accrochage de moteur selon l'invention.

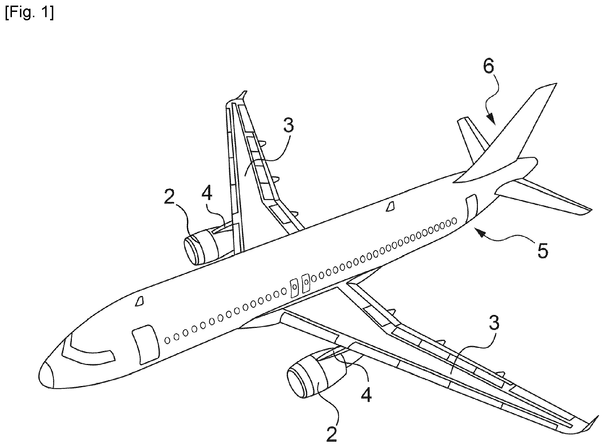

La figure 1 représente un aéronef 1 équipé de deux turboréacteurs 2, par exemple de type UHBR. Cependant, l'invention peut être mise en oeuvre avec tout type de motorisation, y-compris des moteurs à soufflante non carénées. Les turboréacteurs 2 sont chacun implantés sous une aile 3 par l'intermédiaire d'un mât d'accrochage de moteur 4. Dans la suite, l'invention sera décrite sur la base de ce type d'implantation de la motorisation. Néanmoins, l'invention peut être utilisée avec d'autres architecture d'implantation moteur, par exemple sur les ailes, de part et d'autre de la partie arrière de fuselage 5 ou au niveau de l'empennage 6.

Le turboréacteur 2 est accroché sous le mât d'accrochage 4 qui est lui-même suspendu sous l'aile 3. Le mât d'accrochage de moteur 4 est fixé à l'aile 3 par sa partie arrière de façon à ce que sa partie avant à laquelle est accroché le moteur 2 soit située en porte à faux par rapport à l'aile 3.

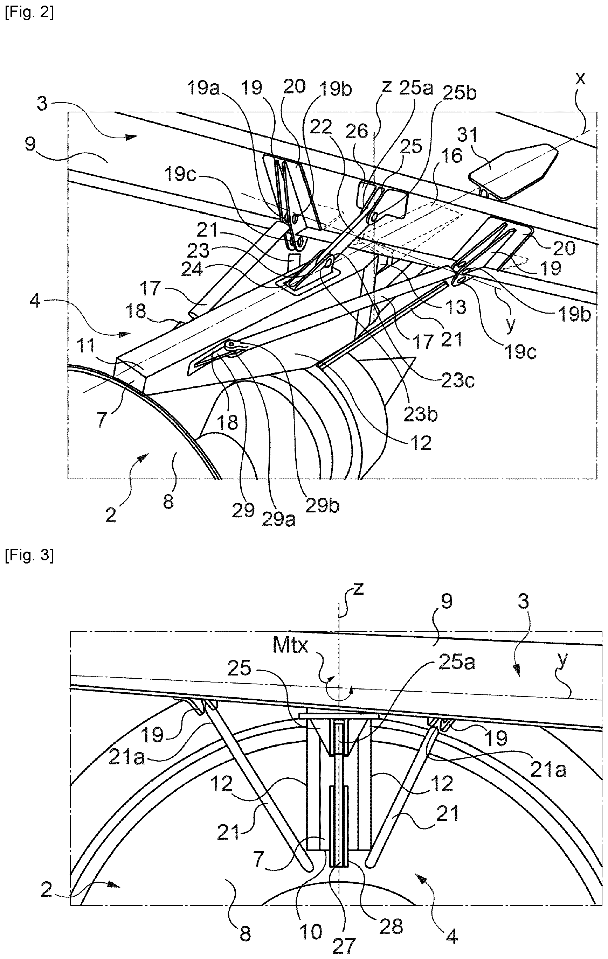

Le mât d'accrochage 4 comprend une structure primaire 7 entourée au moins partiellement d'une structure secondaire (non représentée) formant un carénage aérodynamique afin de réduire l'impact du mât d'accrochage 4 sur la trainée de l'aéronef 1. Les figures 2 à 5 montrent un mât d'accrochage 4 dépourvu de la structure secondaire ainsi qu'un turboréacteur 2 sans sa nacelle et l'aile 3 sans la peau qui la recouvre afin de pouvoir visualiser une partie structurelle moteur 8 et une partie structurelle d'aile 9 auxquelles le mât d'accrochage 4 est attaché mécaniquement.

L'architecture du mât d'accrochage 4 sera décrite dans la suite à l'aide des figures 2 à 5 qui le représentent en perspective et dans différentes directions.

La structure primaire 7 représentant l'élément central du mât d'accrochage de moteur 4 est formée d'un caisson structurel. Alternativement, la structure primaire 7 pourrait être formée par une poutre profilée. Le caisson structurel comprend un longeron inférieur 10 au niveau duquel se trouve un premier dispositif d'attache reliant la partie structurelle moteur 8 de façon isostatique au longeron inférieur 10, et un longeron supérieur 11 au niveau duquel se trouve un deuxième dispositif d'attache reliant également de façon isostatique la structure primaire 7 à la partie structurelle d'aile 9. Il est à noter que les fixations mât/aéronef ou mât/moteur peuvent également ne pas être isostatiques.

Le longeron inférieur 10 et le longeron supérieur 11 sont reliés entre eux par des parois latérales 12 pour former le caisson structurel. Afin de le renforcer, des nervures (non représentées) peuvent être logées dans ledit caisson structurel.

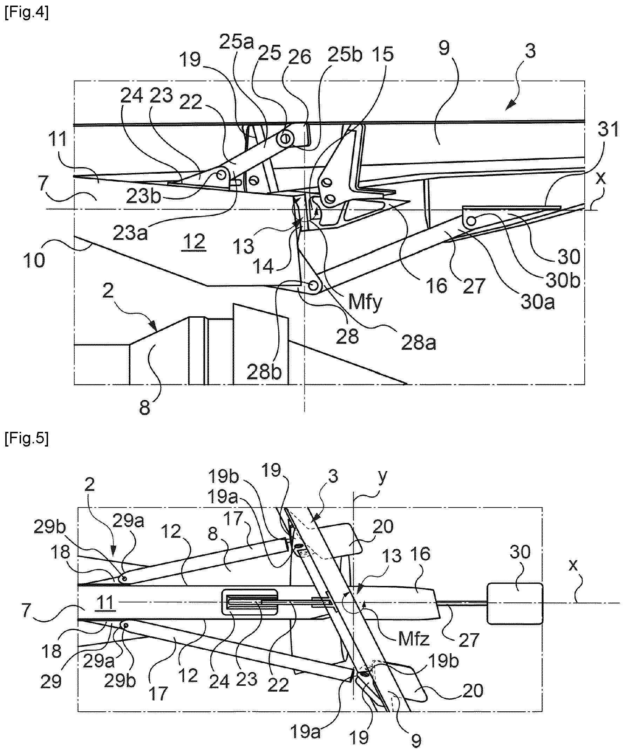

La structure primaire 7 formée du caisson structurel décrit ci-dessus est reliée mécaniquement sous l'aile 3 par une fixation à rotule 13 qui fait partie du deuxième dispositif d'attache. La fixation à rotule 13 est positionnée dans le plan médian longitudinal du caisson structurel formant la structure primaire 7. Comme illustré à la figure 4, la fixation à rotule 13 est constituée d'une sphère 14 fixée sur la face arrière de la structure primaire 7. La sphère 14 vient s'appuyer dans une cuvette de rotule 15 solidaire d'un sabot de fixation 16 qui est fixé mécaniquement sous l'aile 3. La fixation à rotule s'étend vers l'arrière dans le prolongement de la structure primaire 7.

Comme illustré à la figure 2, la structure primaire 7 est d'autre part reliée à l'aile 3 (plus précisément à la partie structurelle d'aile 9) par une pluralité de haubans 17, 21, 22, 27 qui font également partie du deuxième dispositif d'attache. Dans le mode de réalisation privilégié illustré, ces haubans sont rigides sous la forme de bielles. Dans la suite, le système d'haubanage décrit est réalisé par des bielles. Comme expliqué ci-après, l'association de la structure primaire 7 avec les haubans 17, 21, 22, 27 forme une architecture de mât haubané. Ainsi une partie des efforts mécaniques normalement transmis à la structure primaire sont déchargés dans les haubans ce qui permet de réduire les dimensions de la structure primaire, notamment sa largeur. En effet, l'haubanage de la structure primaire 7 permet de réduire de 20% à 40% ses dimensions, notamment sa largeur, ce qui a un impact positif sur la bifurcation des flux d'air à l'avant du mât d'accrochage de moteur 4. De plus, la refermeture des flux d'air à l'arrière du mât en est facilitée ce qui permet de réduire voire de supprimer l'APF.

La multiplication des haubans rigides qui viennent haubaner la structure primaire 7 permet de réduire les efforts au niveau de l'interface entre le mât d'accrochage de moteur 4 et l'aile 3. Par conséquent, la taille des dispositifs de jonction entre le mât d'accrochage de moteur 4 et l'aile 3 ainsi que la taille des pièces de renfort structurelles au droit de ces dispositifs de jonction sur la structure primaire 7 et l'aile 3, peut être réduite. En plus de la réduction de la trainée provenant de l'obstruction aérodynamique créer par les mâts d'accrochage de moteur 4 en partie avant des turboréacteurs 2, cette architecture haubanée du mât d'accrochage de moteur 4 permet d'alléger substantiellement l'ensemble formé par le mât d'accrochage de moteur 4. Ainsi, l'architecture du mât d'accrochage de moteur 4 selon l'invention permet de réaliser une baisse de la consommation spécifique de l'aéronef et une amélioration du block fuel du turboréacteur (c'est-dire de la quantité de fuel à embarquer pour alimenter les turboréacteurs afin de réaliser une mission type).

Un hauban latéral 17 est fixé mécaniquement sur la partie avant de chaque paroi latérale 12 de la structure primaire 7 et s'étend substantiellement horizontalement vers l'arrière en formant un angle aigu avec la paroi latérale 12 respective. Les haubans latéraux 17 sont fixés de façon articulée à leurs interfaces avec la structure primaire 7 et avec la partie structurelle d'aile 9 par des dispositifs de type manille. Dans l'exemple de mis en oeuvre décrit, ces dispositifs de type manille sont des dispositifs plaque/étrier.

Comme illustré aux figures 2 et 5, une première plaque de fixation 29 percée d'un orifice formant ainsi une chape est fixée mécaniquement à l'avant de chaque paroi latérale 12 par une platine de fixation 18. Chaque première plaque de fixation 29 est reliée par un deuxième axe de manille 29b à un étrier 29a fixé mécaniquement à l'extrémité avant de chaque hauban latéral 17 ce qui forme un dispositif de fixation de type manille. L'autre extrémité 19a de chaque hauban latéral 17 est percée d'un trou (ou un anneau y est fixé) afin de recevoir un premier axe de manille 19b. Cet axe est retenu par un premier étrier de fixation 19 qui est relié à la partie structurelle d'aile 9 par une première plaque de renfort 20.

Les haubans latéraux 17 permettent de décharger les contraintes générées par le moment de flexion MfZ selon l'axe Z et autour de la fixation à rotule 13.

Un hauban transversal 21 est fixé mécaniquement sur la partie inférieure arrière de chaque paroi latérale 12 de la structure primaire 7 et s'étend sensiblement verticalement vers le haut en formant un angle aigu avec la paroi latérale 12 respective. Alternativement, les haubans transversaux 21 peuvent être reliés à la partie structurelle moteur 8, ou dans une autre alternative à un élément intermédiaire dit 'poutre d'attache moteur arrière' (non-représenté) positionné entre le longeron inférieur 10 du caisson de la structure primaire 7 et la partie arrière (zone carter de turbine) de la structure moteur 8 Les haubans transversaux 21 sont fixés de façon articulée à leurs interfaces avec la structure primaire 7 et avec la partie structurelle d'aile 9. Dans l'exemple de mise en oeuvre décrit ici, ces fixations de hauban sont également des dispositifs de type manille. Ici ces dispositifs de type manille sont réalisés par des dispositifs plaque/étrier.

Comme illustré aux figures 2 et 3, l'extrémité supérieure 21a de chaque hauban transversal 21 est percée d'un trou (ou un anneau y est fixé) afin de recevoir un premier axe de manille 19c. Cet axe est retenu par le premier étrier de fixation 19 qui est relié à la partie structurelle d'aile 9 par la plaque de renfort 20. Ainsi, chaque étrier de fixation 19 présente deux paires de trous pour retenir les deux premiers axes de manille 19b, 19c des haubans latéraux 17 et transversaux 21. L'extrémité inférieure de chaque hauban transversal 21 est également reliée de façon articulée par un dispositif de manille (non représenté) similaire à celui des haubans latéraux horizontaux 17.

Les haubans transversaux 21 permettent de décharger des contraintes générées par le moment de torsion MtX selon l'axe X autour de la fixation à rotule 13.

Un hauban supérieur 22 est fixé mécaniquement sur le longeron supérieur 11 de la structure primaire 7 et s'étend vers le haut et l'arrière en formant un angle avec le longeron supérieur 11 afin de rejoindre le bord avant de la partie structurelle d'aile 9 à laquelle il est relié. Le hauban supérieur 22 est fixé de façon articulée par des dispositifs de type manille à ses interfaces avec la structure primaire 7 et la partie structurelle d'aile 9.

Comme illustré aux figures 2 et 4, chaque extrémité 23a et 25a du hauban supérieur 22 est percée d'un orifice (alternativement un anneau peut être fixé à une ou aux deux extrémités du hauban supérieur 22) afin de relier le hauban supérieur 22 par un premier et un deuxième axe de manille 23b et 25b, d'une part, à un deuxième étrier de fixation 23 fixé mécaniquement par une deuxième plaque de fixation 24 au longeron supérieur 11, et, d'autre part, à un troisième étrier de fixation 25 fixé mécaniquement par une deuxième plaque de renfort 26 à l'avant de la partie structurelle d'aile 9.

Un hauban inférieur 27, qui vient doubler le hauban supérieur 22, est fixé mécaniquement sur la partie arrière inférieure de la structure primaire 7 et s'étend vers le haut et l'arrière, , afin de rejoindre le dessous de l'aile 3, à laquelle il est relié. Dans la forme de réalisation illustrée, le hauban inférieur 27 est substantiellement parallèle au hauban supérieur 22. Le hauban inférieur 27 est fixé de façon articulée à ses interfaces avec la structure primaire 7 et l'aile 3.

Comme illustré aux figures 2 et 4, chaque extrémité 28a et 30a du hauban inférieur 27 est percée d'un orifice (alternativement un anneau peut être fixé à une ou aux deux extrémités du hauban inférieur 27) afin de relier le hauban inférieur 27 par un premier et un deuxième axe de manille 28b et 30b d'une part à un quatrième étrier de fixation 28 fixé mécaniquement à la partie arrière inférieure de la structure primaire 7, et d'autre part à un cinquième étrier de fixation 30 fixé mécaniquement par une troisième plaque de renfort 31 sur le dessous de l'aile 3.

Le hauban supérieur 22 et le hauban inférieur 27 permettent de décharger des contraintes générées par le moment de flexion MfY selon l'axe Y et autour de la fixation à rotule 13. Une telle architecture, notamment par le hauban inférieur 27 qui prolonge vers l'arrière la structure primaire 7 permet d'en réduire la longueur ce qui permet de refermer encore plus facilement les flux d'airs derrière le mât d'accrochage moteur 4 et éventuellement d'éliminer l'APF. Ainsi il est possible de réaliser un gain de poids supplémentaire.

En outre, une telle architecture de par son aménagement général est considérée suffisamment robuste pour tolérer la perte ou rupture d'un des éléments haubans 17, 21, 22 ou 27. On parle d'un système 'fail-safe' en terminologie aéronautique et en langue anglaise. Ceci est lié au fait que chaque hauban latéral 17est doublé par un hauban transversal 21, ainsi il y a deux haubans (un hauban latéral 17 et un hauban transversal 21) distribués de part et d'autre de la structure primaire du mât 7 et sensiblement symétriques selon un plan vertical comprenant les axes X et Z. De plus, comme précédemment mentionné, le hauban supérieur 22 est doublé par le hauban inférieur 27 (et vice-versa).

Bien que dans la description ci-dessus, les aspects particuliers de l'invention, notamment la mise en oeuvre du mât d'accrochage de moteur, sont décrits dans le contexte d'un turboréacteur de type UHBR suspendu sous l'aile d'un aéronef, les mâts d'accrochage de moteur selon l'invention peuvent permettre d'implanter tout autre type de moteur d'aéronef en partie arrière de fuselage ou au niveau de l'empennage. Dans le cas d'une implantation sous les ailes, un ou deux moteurs peuvent-être implantés sous chaque aile. De plus, il est possible de ne mettre en oeuvre qu'une partie des haubans décrits afin de ne réduire la taille de la structure primaire 7 que dans une ou plusieurs dimensions.

## Revendications

1. Mât d'accrochage de moteur à un élément structurel d'aéronef (3), ledit mât d'accrochage de moteur (4) comprenant une structure primaire (7), un premier dispositif d'attache à un moteur d'aéronef (2) et un deuxième dispositif d'attache audit élément structurel d'aéronef (3), le deuxième dispositif d'attache audit élément structurel d'aéronef (3) comprend au moins un hauban (17, 21, 22, 27), un premier dispositif de fixation de hauban pour relier mécaniquement une première extrémité dudit au moins un hauban (17, 21, 22, 27) à l'élément structurel d'aéronef (3), et un deuxième dispositif de fixation de hauban reliant mécaniquement une deuxième extrémité dudit au moins un hauban (17, 21, 22, 27) à la structure primaire (7) du mât, le deuxième dispositif d'attache audit élément structurel d'aéronef (3) comprenant en outre une fixation à rotule (13) reliant mécaniquement l'arrière de la structure primaire (7) à l'élément structurel de l'aéronef (3), le mât d'accrochage comprenant au moins deux haubans latéraux (17) reprenant le moment de flexion (MfZ) générés autour d'un axe Z sensiblement perpendiculaire à l'élément structurel d'aéronef (3) auquel est fixé le mât d'accrochage (7) et passant par la rotule de fixation (13), et au moins deux haubans transversaux (21) reprenant les moments de torsion (MtX) générés autour d'un axe X sensiblement parallèle à la direction de déplacement de l'aéronef et passant par la rotule de fixation (13).

2. Mât d'accrochage de moteur d'aéronef selon la revendication 1, tel que ledit au moins un hauban (17, 21, 22, 27) est une bielle.

3. Mât d'accrochage de moteur d'aéronef selon l'une des revendications 1 ou 2, tel que le premier dispositif de fixation comprend un dispositif de type manille dont une première partie (19, 25, 30) est apte à être reliée mécaniquement à l'élément structurel d'aéronef (3), une deuxième partie (19a, 25a, 30a) est reliée mécaniquement à ladite première extrémité de l'au moins un hauban (17, 21, 22, 27), et un premier axe (19b, 25b, 30b) relie la première partie (19, 25, 30) et la deuxième partie du dispositif de type manille.

4. Mât d'accrochage de moteur d'aéronef selon la revendication 3, tel que le mât d'accrochage comprend une plaque de renfort (20, 26, 31), et tel que la première partie (19, 25, 30) du dispositif de type manille est apte à être reliée mécaniquement à l'élément structurel d'aéronef (3) via la plaque de renfort (20, 26, 31).

5. Mât d'accrochage de moteur d'aéronef selon l'une quelconque des revendications précédentes, tel que le deuxième dispositif de fixation comprend un dispositif de type manille comprenant un étrier de fixation (29, 23, 28) et un anneau de haubanage (29a, 28a, 23a) ; l'étrier de fixation (29, 23, 28) et l'anneau de haubanage (29a, 28a, 23a) étant reliés entre eux par un deuxième axe de manille (29b, 28b, 23b), et les deux étant reliés mécaniquement respectivement soit à la structure primaire (7) soit à ladite deuxième extrémité de l'au moins un hauban (17, 21, 22, 27).

6. Mât d'accrochage de moteur d'aéronef selon l'une quelconque des revendications 1 à 5, tel qu'il comprend au moins un hauban supérieur (22) et un hauban inférieur (27) reprenant le moment de flexion (MfY) générés autour d'un axe Y sensiblement perpendiculaire aux axes X et Z et passant par la rotule de fixation (13), lesdits haubans inférieur et supérieur (22, 27) s'étendant sensiblement dans un plan parallèle contenant les axes X et Z.

7. Mât d'accrochage de moteur d'aéronef selon la revendication 6, dans lequel ledit hauban inférieur (27) prolonge vers l'arrière la structure primaire (7).

8. Aéronef comprenant au moins un moteur (2) suspendu sous une aile (3) de l'aéronef par un mât d'accrochage de moteur (4) tel que défini dans l'une des revendications précédentes.

9. Aéronef selon la revendication 8, tel que la structure primaire (7) du mât d'accrochage de moteur (4) est implantée en porte à faux sur l'avant de l'aile (3) sous laquelle elle est reliée mécaniquement.

## Patentansprüche

1. Pylon zur Aufhängung eines Triebwerks an einem Luftfahrzeug-Strukturelement (3), wobei der Pylon (4) zur Aufhängung eines Triebwerks eine primäre Struktur (7), eine erste Vorrichtung zur Halterung an einem Luftfahrzeugtriebwerk (2) und eine zweite Vorrichtung zur Halterung an dem Luftfahrzeug-Strukturelement (3) umfasst, wobei die zweite Vorrichtung zur Befestigung an dem Luftfahrzeug-Strukturelement (3) mindestens eine Abspannung (17, 21, 22, 27), eine erste Vorrichtung zur Befestigung der Abspannung, um ein erstes Ende der mindestens einen Abspannung (17, 21, 22, 27) mit dem Luftfahrzeug-Strukturelement (3) mechanisch zu verbinden, und eine zweite Vorrichtung zur Befestigung der Abspannung, die ein zweites Ende der mindestens einen Abspannung (17, 21, 22, 27) mit der primären Struktur (7) des Pylons mechanisch verbindet, umfasst, wobei die zweite Vorrichtung zur Halterung an dem Luftfahrzeug-Strukturelement (3) außerdem eine Kugelgelenkbefestigung (13) umfasst, die den hinteren Teil der primären Struktur (7) mit dem Luftfahrzeug-Strukturelement (3) mechanisch verbindet, wobei der Pylon zur Aufhängung mindestens zwei seitliche Abspannungen (17) umfasst, die das Biegemoment (MfZ) aufnehmen, das um eine Achse Z erzeugt wird, die im Wesentlichen senkrecht zu dem Luftfahrzeug-Strukturelement (3) ist, an dem der Pylon zur Aufhängung (7) befestigt ist, und durch das Befestigungskugelgelenk (13) verläuft, und mindestens zwei Querabspannungen (21), welche die Torsionsmomente (MtX) aufnehmen, die um eine Achse X erzeugt werden, die im Wesentlichen parallel zur Bewegungsrichtung des Luftfahrzeugs ist und durch das Befestigungskugelgelenk (13) verläuft.

2. Pylon zur Aufhängung eines Luftfahrzeugtriebwerks nach Anspruch 1, wobei die mindestens eine Abspannung (17, 21, 22, 27) eine Schubstange ist.

3. Pylon zur Aufhängung eines Luftfahrzeugtriebwerks nach einem der Ansprüche 1 oder 2, wobei die erste Vorrichtung zur Befestigung eine Vorrichtung von der Art eines Schäkels umfasst, von der ein erster Teil (19, 25, 30) mit dem Luftfahrzeug-Strukturelement (3) mechanisch verbindbar ist, ein zweiter Teil (19a, 25a, 30a) mit dem ersten Ende der mindestens einen Abspannung (17, 21, 22, 27) mechanisch verbunden ist und eine erste Achse (19b, 25b, 30b) den ersten Teil (19, 25, 30) und den zweiten Teil der Vorrichtung von der Art eines Schäkels verbindet.

4. Pylon zur Aufhängung eines Luftfahrzeugtriebwerks nach Anspruch 3, wobei der Pylon zur Aufhängung eine Verstärkungsplatte (20, 26, 31) umfasst und wobei der erste Teil (19, 25, 30) der Vorrichtung von der Art eines Schäkels mit dem Luftfahrzeug-Strukturelement (3) über die Verstärkungsplatte (20, 26, 31) mechanisch verbindbar ist.

5. Pylon zur Aufhängung eines Luftfahrzeugtriebwerks nach einem der vorhergehenden Ansprüche, wobei die zweite Vorrichtung zur Befestigung eine Vorrichtung von der Art eines Schäkels umfasst, die einen Befestigungsbügel (29, 23 28) und einen Abspannring (29a, 28a, 23a) umfasst; wobei der Befestigungsbügel (29, 23 28) und der Abspannring (29a, 28a, 23a) durch eine zweite Schäkelachse (29b, 28b, 23b) miteinander verbunden sind und diese beiden Teile mit der primären Struktur (7) bzw. mit dem zweiten Ende der mindestens einen Abspannung (17, 21, 22, 27) mechanisch verbunden sind.

6. Pylon zur Aufhängung eines Luftfahrzeugtriebwerks nach einem der Ansprüche 1 bis 5, wobei sie mindestens eine obere Abspannung (22) und eine untere Abspannung (27) umfasst, die das Biegemoment (MfY) aufnehmen, das um eine Achse Y erzeugt wird, die im Wesentlichen senkrecht zu den Achsen X und Z ist und durch das Befestigungskugelgelenk (13) verläuft, wobei die obere und die untere Abspannung (22, 27) sich im Wesentlichen in einer parallelen Ebene erstrecken, welche die Achsen X und Z enthält.

7. Pylon zur Aufhängung eines Luftfahrzeugtriebwerks nach Anspruch 6, wobei die untere Abspannung (27) die primäre Struktur (7) nach hinten verlängert.

8. Luftfahrzeug, welches mindestens ein Triebwerk (2) umfasst, das unter einer Tragfläche (3) des Luftfahrzeugs durch einen Pylon (4) zur Aufhängung des Triebwerks, wie in einem der vorhergehenden Ansprüche definiert, aufgehängt ist.

9. Luftfahrzeug nach Anspruch 8, wobei die primäre Struktur (7) des Pylons (4) zur Aufhängung des Triebwerks am vorderen Teil der Tragfläche (3), unter der sie mechanisch befestigt ist, freitragend angebracht ist.

## Claims

1. Pylon for mounting an engine to an aircraft structural element (3), said engine mounting pylon (4) comprising a primary structure (7), a first fastening device for fastening to an aircraft engine (2) and a second fastening device for fastening to said aircraft structural element (3), the second fastening device for fastening to said aircraft structural element (3) comprises at least one brace (17, 21, 22, 27), a first brace-attachment device for mechanically connecting a first end of said at least one brace (17, 21, 22, 27) to the aircraft structural element (3), and a second brace-attachment device that mechanically connects a second end of said at least one brace (17, 21, 22, 27) to the primary structure (7) of the pylon, the second fastening device for fastening to said aircraft structural element (3) furthermore comprising a ball-joint attachment (13) that mechanically connects the rear of the primary structure (7) to the structural element (3) of the aircraft, the mounting pylon comprising at least two lateral braces (17) that take up the bending moments (MfZ) generated about a Z axis that is substantially perpendicular to the aircraft structural element (3) to which the mounting pylon (7) is attached and that passes through the ball-joint attachment (13), and at least two transverse braces (21) that take up the torsion moments (MtX) generated about an X axis that is substantially parallel to the direction of movement of the aircraft and that passes through the ball-joint attachment (13).

2. Pylon for mounting an aircraft engine according to Claim 1, such that said at least one brace (17, 21, 22, 27) is a connecting rod.

3. Pylon for mounting an aircraft engine according to either of Claims 1 and 2, such that the first attachment device comprises a shackle-type device, a first part (19, 25, 30) of which is able to be mechanically connected to the aircraft structural element (3), a second part (19a, 25a, 30a) of which is mechanically connected to said first end of the at least one brace (17, 21, 22, 27), and a first pin (19b, 25b, 30b) of which connects the first part (19, 25, 30) and the second part of the shackle-type device.

4. Pylon for mounting an aircraft engine according to Claim 3, such that the mounting pylon comprises a reinforcing plate (20, 26, 31), and such that the first part (19, 25, 30) of the shackle-type device is able to be mechanically connected to the aircraft structural element (3) via the reinforcing plate (20, 26, 31).

5. Pylon for mounting an aircraft engine according to any one of the preceding claims, such that the second attachment device comprises a shackle-type device comprising an attachment bracket (29, 23, 28) and a bracing ring (29a, 28a, 23a); the attachment bracket (29, 23, 28) and the bracing ring (29a, 28a, 23a) being interconnected via a second shackle pin (29b, 28b, 23b), and being mechanically connected respectively either to the primary structure (7) or to said second end of the at least one brace (17, 21, 22, 27).

6. Pylon for mounting an aircraft engine according to any one of Claims 1 to 5, such that it comprises at least one upper brace (22) and one lower brace (27) that take up the bending moments (MfY) generated about a Y axis that is substantially perpendicular to the X and Z axes and that passes through the ball-joint attachment (13), said lower and upper braces (22, 27) extending substantially in a parallel plane which includes the X and Z axes.

7. Pylon for mounting an aircraft engine according to Claim 6, wherein said lower brace (27) rearwardly continues the primary structure (7).

8. Aircraft comprising at least one engine (2) suspended beneath a wing (3) of the aircraft via an engine mounting pylon (4) as defined in one of the preceding claims.

9. Aircraft according to Claim 8, such that the primary structure (7) of the engine mounting pylon (4) is installed in cantilever fashion on the front of the wing (3) beneath which it is mechanically connected.
